(19) Europäisches Patentamt
European Patent Office
Office européen des brevets

(11) Publication number: **0 360 439 A2**

(12) # EUROPEAN PATENT APPLICATION

(21) Application number: 89308776.7

(22) Date of filing: 30.08.89

(51) Int. Cl.5: C08L 23/20 , C08K 7/02 , //(C08L23/20,81:04,7:02)

(30) Priority: 02.09.88 JP 219749/88
02.09.88 JP 219750/88
02.09.88 JP 219751/88

(43) Date of publication of application:
28.03.90 Bulletin 90/13

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100(JP)

(72) Inventor: Hirotaka, Aso
Mitsui Petrochemical Industries Ltd. 1-2, Waki
6-chome Waki-cho Kuga-gun Yamaguchi(JP)

(74) Representative: Cresswell, Thomas Anthony et al
J.A. Kemp & Co. 14 South Square Gray's Inn
London WC1R 5EU(GB)

(54) **Heat resistant poly-4-methyl-1-pentene resin compostition and shaped article thereof.**

(57) A heat resistant poly-4-methyl-1-pentene resin composition, especially having an excellent thermal aging resistance and heat resistant rigidity, containing poly-4-methyl-1-pentene and polyphenylene sulfide and, optionally, reinforcing fiber and a shaped article derived therefrom.

EP 0 360 439 A2

# HEAT RESISTANT POLY-4-METHYL-1-PENTENE RESIN COMPOSITION AND SHAPED ARTICLE THEREOF

## BACKGROUND OF THE INVENTION

### 1. Field of the Invention

The present invention relates to a heat resistant poly-4-methyl-1-pentene resin composition and a shaped article thereof, especially having an excellent thermal aging resistance and heat resistant rigidity.

### 2. Description of the Related Art

Poly-4-methyl-1-pentene resins are widely used as a resin superior in transparency and mechanical properties. The poly-4-methyl-1-pentene resin has a melting point of 235 °C, which is higher than other polyolefins, so that it is used for shaped articles as a resin superior in heat resistance. However, at temperatures higher than the melting point, it is naturally not possible for it to maintain its shape, so that there has been the limitation that the range of use of the shaped articles was a temperature lower than the melting point.

On the other hand, a resin composition including 70 to 97% by weight of polyphenylene sulfide which has been acid treated and then washed and 30 to 3% by weight of an olefin copolymer having alpha-olefin and $\alpha$-, $\beta$-unsaturated acid glycyl esters as essential components has been proposed as a polyphenylene sulfide resin composition having improved impact properties (Japanese Unexamined Patent Publication (Kokai) No. 62-153343). However, there are no disclosures therein on the point of improvement of the heat resistance of a poly-4-methyl-1-pentene resin.

## SUMMARY OF THE INVENTION

Accordingly, the objects of the present invention are to eliminate the above-mentioned problems of the prior art and to improve the heat resistance of a poly-4-methyl-1-pentene resin and enable the poly-4-methyl-1-pentene resin to maintain its shape at a temperature higher than its melting point and further to provide a poly-4-methyl-1-pentene resin composition and resin shaped article having superior thermal aging resistance and heat resistant rigidity.

Other objects and advantages of the present invention will be apparent from the following description.

In accordance with the first aspect of the present invention, there is provided a heat resistant poly-4-methyl-1-pentene resin composition containing (i) 100 parts by weight of a resin component including 80 to 90% by weight, preferably 80 to 87% by weight, of poly-4-methyl-1-pentene and 10 to 20% by weight, preferably 13 to 20% by weight of polyphenylene sulfide and (ii) 10 to 60 parts by weight of reinforcing fiber. In accordance with the present invention, there is also provided a heat resistant poly-4-methyl-1-pentene resin shaped article derived from the above-mentioned resin composition, wherein the polyphenylene sulfide forms a lamellar continuous phase at a surface layer thereof.

In accordance with the second aspect of the present invention, there is further provided a heat resistant poly-4-methyl-1-pentene resin composition containing 40 to 84% by weight, preferably 60 to 82% by weight, of poly-4-methyl-1-pentene and 16 to 60% by weight, preferably 18 to 40% by weight, of polyphenylene sulfide. In accordance with the present invention, there is still further provided a heat resistant poly-4-methyl-1-pentene resin shaped article derived from the above-mentioned resin composition, wherein the polyphenylene sulfide forms a lamellar continuous phase at a surface layer thereof.

In accordance with the third aspect of the present invention, there is still further provided a heat resistant poly-4-methyl-1-pentene resin composition characterized by containing 40 to 84% by weight, preferably 60 to 82% by weight of poly-4-methyl-1-pentene, partially or entirely graft modified by unsaturated carboxylic acid or a derivative thereof in a range of 0.01 to 10% by weight, and 16 to 60% by weight, preferably 18 to 40% by weight, of polyphenylene sulfide. In accordance with the present invention, there is still further provided a heat resistant poly-4-methyl-1-pentene resin shaped article wherein the polyphenylene sulfide forms lamellar continuous phases at a surface portion thereof.

BRIEF DESCRIPTION OF THE DRAWING

The present invention will be better understood from the description set forth below with reference to the accompanying drawings, in which:

Figure 1 and Figs 2 and 3 are micrographs showing the particle structure of resin shaped articles of the present invention.

The poly-4-methyl-1-pentene usable in the present invention is a homopolymer of 4-methyl-1-pentene or a copolymer of 4-methyl-1-pentene and another α-olefin, for example, ethylene, propylene, 1-butene, 1-hexene, 1-octene, 1-decene, 1-tetradecene, 1-octadecene, and other alpha-olefins having 2 to 20 carbon atoms, usually a copolymer comprised primarily of 4-methyl-1-pentene including 85 mole% or more, preferably 91 mole% or more, of 4-methyl-1-pentene. The melt flow rate (load: 5 kg, temperature: 260°C) of poly-4-methyl-1-pentene is preferably in the range of 5 to 500 g/10 min, preferably 25 to 150 g/10 min. When the melt flow rate is less than 5 g/10 min, the melt viscosity is high and the formability is poor, while when the melt flow rate is more than 500 g/10 min, the melt viscosity is low and the formability is poor and further the mechanical strength is low.

In the present invention, a poly-4-methyl-1-pentene may be modified partially or entirely with an unsat urated carboxylic acid or derivative thereof.

The modified poly-4-methyl-1-pentene optionally usable in the present invention is a poly-4-methyl-1-pentene entirely or partially graft modified in a range of 0.01 to 10% by weight, preferably 0.1 to 5% by weight, with a graft monomer selected from unsaturated carboxylic acids or their derivatives, normally a crystalline polymer with an inherent viscosity in a decalin solvent at 135°C of 0.5 to 15 dl/g, preferably 0.6 to 10 dl/g, and with a melting point (ASTM D 3418) of 200°C or more. When the graft amount of unsaturated carboxylic acids or their derivatives is less than 0.01% by weight, the mutual solubility with the afore-mentioned polyphenylene sulfide is poor and there is a danger of the composition being poor in heat resistance and mechanical strength. On the other hand, when the graft amount is more than 10% by weight, the water resistance of the resin composition tends to be poor.

Examples of the unsaturated carboxylic acids or their derivatives grafted to the above-mentioned poly-4-methyl-1-pentene in the present invention are acrylic acid, maleic acid, fumaric acid, tetrahydrophthalic acid, itaconic acid, citraconic acid, crotonic acid, isocrotonic acid, Nadick acid (registered trademark of endocis-bicyclo[2,2,1]hepto-5-en-2,3-dicarboxylic acid), and other unsaturated carboxylic acids or their derivatives, for example, acid halides, amides, imides, anhydrides, and esters. Specifically, maleanil chloride, maleimide, anhydrous maleic acid, anhydrous citraconic acid, maleic acid monomethyl, maleic acid dimethyl, and glycidyl maleate. Among these, unsaturated dicarboxylic acids and other derivatives are optimal, in particular maleic acid, Nadick acid, or acid anhydrides thereof are optimal.

To graft copolymerize the graft monomers selected from these unsaturated carboxylic acids and their derivatives with the above-mentioned poly-4-methyl- 1-pentene to form a modified substance, various methods known in the prior art may be used. For example, there are the method of melting the polymer and adding the graft monomer for graft copolymerization, the method of dissolving the polymer in a solvent and adding a graft monomer for graft copolymerization.

In each case, it is preferable to effect the reaction in the presence of a radical initiator so as to perform the graft copolymerization of the graft monomer efficiently. The graft reaction is usually performed at a temperature of 60 to 350°C. The ratio of the radical initiator used is usually in the range of 0.001 to 1 part by weight based on 100 parts by weight of the polymer. As the radical initiator, organic peroxides, organic peresters, and other azo compounds may be used. Among these radical initiators, dicumyl peroxide, di-tert-butyl peroxide, 2,5-dimethyl-2,5-di(tert-butylperoxy)hexine-3, 2,5-dimethyl-2,5-(tert-butylperoxy)hexane, 1,4-bis(tert-butylperoxyisopropyl)benzene, and other dialkyl peroxides are preferably used.

The modified poly-4-methyl-1-pentene constituting the resin composition of the present invention may be a poly-4-methyl-1-pentene completely graft modified by unsaturated carboxylic acid or a mixture with an unmodified poly-4-methyl-1-pentene, that is, a partially modified poly-4-methyl-1-pentene, so long as the unsaturated carboxylic acids or their derivatives are within the above-mentioned range. It should be noted that, in the case of a mixture with unmodified poly-4-methyl-1-pentene, a grafted amount of modified poly-4-methyl-1-pentene of a slightly high concentration, usually up to 25% by weight may be used, so long as the graft amount of, for example, the unsaturated carboxylic acid in the mixture is within the above-mentioned range.

The polyphenylene sulfide usable in the present invention is essentially comprised of repeating units shown by the structural formula

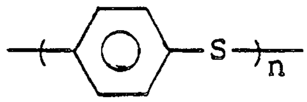

wherein n is a repeating number, and may include small amounts of other copolymerizable component units, for example,

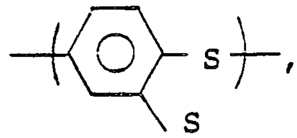

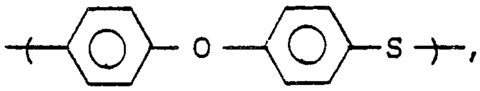

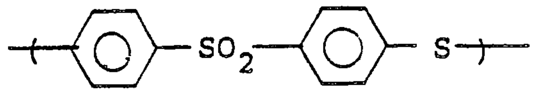

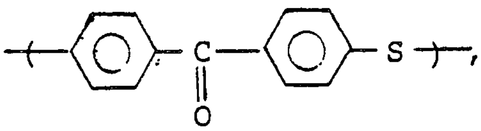

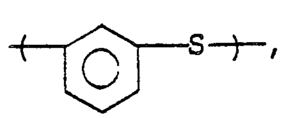

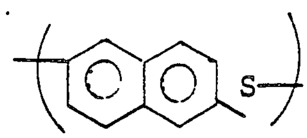

These polyphenylene sulfides preferably are those with melt viscosities in the range of 50 to 50,000 poise, preferably 100 to 5, 000 poise, under conditions of 300°C and a shear rate $\dot{\gamma}$ of 200 $sec^{-1}$.

The reinforcing fiber usable in the present invention includes, for example, reinforcing fiber comprised of glass fiber, carbon fiber, boron fiber, potassium titanate fiber, wollastonite, asbestos fiber, and other inorganic substances or aramide fibers known by the trademark Kevler and other organic substances. Further, the surface of the fiber may be treated, in advance, with silane compounds, for example, vinyl triethoxy silane, γ-aminopropyl triethoxy silane, γ-aminopropyl trimethoxy silane, N-(β-aminoethyl)-γ-aminopropyl trimethoxy silane, γ-glycidoxypropyl trimethoxy silane, γ-glycydoxypropyl trimethoxy silane.

In the above-mentioned resin composition, the poly-4-methyl-1-pentene accounts for the major part of the resin composition. Even if a small amount of polyphenylene sulfide and optionally reinforcing fiber are mixed in it, it is inconceivable by common sense that the poly-4-methyl-1-pentene could maintain its shape above its melting point, but by the above-mentioned composition, the heat resistance can be improved and the shape can be held even at a temperature higher than the melting point of the poly-4-methyl-1-pentene and further the thermal aging resistance and the heat resistant rigidity are improved.

The resin composition of the present invention may have added thereto in a range not impairing the object of the present invention a heat resistance stabilizer, weather resistance stabilizer, flame retardant, uncleating agent, pigment, dye, lubricant, rust preventative, or other various agents conventionally added to and mixed with polyolefins.

For example, as the flame retardant, tricresyl phosphate, cresyl diphenyl phosphate, diphenyl octyl phosphate, tributyl phosphate, and other phosphate esters, tris(beta-chloroethyl)phosphate, tris-(dichloropropyl)phosphate, tris(2,3-dibromopropyl)phosphate, tris(bromochloropropyl)phosphate, and other halogen-containing phosphate esters, chlorinated paraffin, chlorinated polyethylene, brominated polyphenyl, chlorinated polyphenyl, dechlorane, dechlorane plus, tetrabromoethane, tetrabromobutane, 1,2-dibromo-3-chloropropane, 1,2,3-tribromopropane, hexabromocyclododecane, tetrabromobenzene, chlorinated diphenyl, decabromodiphenyloxide, N,N′-ethylenebis-tetrabromophthalimide, tribromopolystyrene, polydibromobenzeneoxide, bistribromophenoxyethane, and other halogen compounds, antimony trioxide, antimony potassium oxalate, triphenylstibine, and other antimony compounds, borax, zinc borate, barium metaborate, and other boron compounds, magnesium hydroxide, aluminum hydroxide, calcium hydroxide, barium hydroxide, and other metal hydroxides, among which halogen compounds, in particular dechlorane, decabromodiphenyloxide, N,N′-ethylenebis-tetrabromophthalimide, brominated epoxy and other halogen compounds and antimony trioxide used together or magnesium hydroxide are preferable since they can impart flame retardance without inviting reduction of the heat resistance and mechanical strength.

As the method for obtaining the resin composition of the present invention, it is possible to obtain the same by mixing the components in the above-mentioned ranges. As the method of mixing, various known methods, for example, the method of mixing with a Henschel mixer, V-blender, ribbon blender, tumbler blender, and the method of mixing then further using a single screw extruder, a twin screw extruder, kneader, for melting, kneading, then granulating or pulverizing may be used.

The resin composition of the present invention is made into a resin shaped article by general shaping methods such as injection molding, compression molding, and extrusion, but, of these, if injection molding is used, the polyphenylene sulfide and reinforcing fiber form lamellar, complex, continuous phases at the surface portion of the shaped article, so shaped articles can be obtained greatly improved in the heat resistance of the shaped article, in particular superior in heat resistant aging property and heat resistant rigidity.

Figure 1 is a micrograph (450 X) of a section showing the state of dispersion of the polymers constituting the composition at the surface portion of a resin shaped article of Example 1, mentioned later, produced by injection molding.

Figure 2 is a micrograph (100 X) of a section showing the state of dispersion of the polymers constituting the composition at the surface portion of a resin shaped article of Example 4, mentioned later, produced by injection molding, from which it is learned that the polyphenylene sulfide forms lamellar, continuous phases at the surface portion.

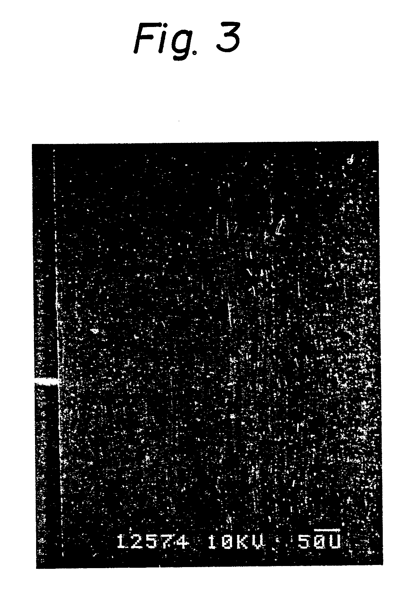

Figure 3 is a micrograph (100 X) of a section showing the state of dispersion of the polymers constituting the composition at the surface portion of a resin shaped article of Example 8, mentioned later, produced by injection molding, from which it is learned that the polyphenylene sulfide forms lamellar, continuous phases at the surface portion.

According to the present invention, polyphenylene sulfide and optionally reinforcing fiber are mixed in the unmodified or modified poly-4-methyl-1-pentene to make it possible for the poly-4-methyl-1-pentene to hold its shape at a temperature higher than its melting point and further a poly-4-methyl-1-pentene resin composition is obtained having a superior thermal aging resistance and heat resistant rigidity. The poly-4-methyl-1-pentene resin composition of the present invention is further improved in the thermal aging resistance and heat resistant rigidity since the polyphenylene sulfide and optionally reinforcing fiber form lamellar, complex, continuous phases at the surface portion.

## EXAMPLES

The present invention will now be further illustrated in detail by, but is by no means limited to, the following Examples.

### Reference Example 1 (Production of Modified Polyolefin)

4-Methyl-1-pentene homopolymer having an [η] of 1.7 dl/g, an Mw/Mn of 7.5, a melting point of 241 °C, a crystallinity of 42%, and a DSC parameter 3.0 was used and a graft reaction of anhydrous maleic acid was performed in a toluene solution at 145 °C with a dicumylperoxide catalyst. An excess of acetone was added to the resultant reaction product to precipitate the polymer. The precipitated polymer was filtered out and the precipitate was repeatedly washed with acetone to obtain anhydrous maleic acid graft modified poly-4-methyl-1-pentene A (hereinafter referred to as modified TPX (A)).

The graft ratio of the anhydrous maleic acid units of the modified polymer was 4.0% by weight and the [η] was 0.95 dl/g, the melting point 210 °C, the crystallinity 18%, the Mw/Mn 4.5, and the DSC parameter 2.8.

### Reference Example 2 (Production of Modified Polyolefin

Anhydrous maleic acid and 2,5-dimethyl-2,5-di(tertbutylperoxy)hexine-3 were added to 4-methyl-1-pentene homopolymer having an [η] of 3.8 dl/g, an $\overline{M}w/\overline{M}n$ of 7.3, a melting point of 240 °C, a crystallinity of 41% and a DSC parameter of 3.2. The mixture was supplied to a single screw extruder set to 260 °C in an $N_2$ atmosphere and melted and kneaded so as to obtain an anhydrous maleic acid graft modified poly-4-methyl-1-pentene B (hereinafter referred to as modified TPX (B)).

The graft ratio of the anhydrous maleic acid units of the modified polymer was 1.4% by weight and the

[$\eta$] was 0.15 dl/g, the melting point 212°C, the crystallinity 24%, the $\overline{M}w/\overline{M}n$ 5.2, and the DSC parameter 4.3.

## Examples 1 and 2

Polyphenylene sulfide (PPS, T-4 available from Toplan Co.), the TPX (A) obtained in the Reference Examples, and unmodified poly-4-methyl-1-pentene (made by Mitsui Petrochemical Industries Ltd., TPX (registered trademark) RT18), and further glass fiber (GF) were mixed in the ratios shown in Table 1, then melted and kneaded using a twin screw extruder at a molding temperature of 290°C, then injection molded at 290°C by an injection molding machine (IS50 made by Toshiba Kikai Co.) to obtain a cap-like, thin resin shaped article with a thickness of 0.5 mm.

The above-mentioned resin shaped article was placed in an oven where a predetermined temperature was held for five minutes so as to perform a shape holding test. The results are shown in Table 1.

## Example 3

The same procedures were followed as in Example 1 except that, instead of the TPX and TPX (A) in Example 1, the TPX (B) obtained in Reference Example 2 was used.

The results are shown in Table 1.

## Comparative Example 1

The same procedures were followed as in Example 1, except that the GF used in Example 1 was omitted, an amount of the T-4 was reduced to 15% by weight, and further an amount of the TPX was increased to 84% by weight.

The results are shown in Table 1.

## Comparative Example 2

The same procedures were followed as in Example 1, except that the T-4 used in Example 1 was omitted and an amount of the TPX was increased to 99% by weight.

The results are shown in Table 1.

## Comparative Example 3

The same procedures were followed as in Example 1, except that no GF was used as in Example 1 and further an amount of the PPS was increased to 40% by weight and an amount of the TPX was reduced to 59% by weight.

The results are shown in Table 1.

Table 1

| | Ex. 1 | Ex. 2 | Ex. 3 | Comp. Ex. 1 | Comp. Ex. 2 | Comp. Ex. 3 |
|---|---|---|---|---|---|---|
| Composition (%wt) | | | | | | |
| T-4 (PPS) | 20 | 13 | 20 | 15 | - | 40 |
| TPX (A) | 1 | 1 | - | 1 | 1 | 1 |
| TPX (B) | - | - | 80 | - | - | - |
| TPX | 79 | 86 | - | 84 | 99 | 59 |
| Parts by weight GF | 30 | 30 | 30 | - | 30 | - |
| Atmospheric temperature x 5 minutes | | | | | | |
| 230 °C | o | o | o | o | o | o |
| 240 °C | o | o | o | x | x | o |
| 250 °C | o | o | o | - | - | o |
| 260 °C | o | o | o | - | - | o |
| 270 °C | o | Δ | o | - | - | o |
| 280 °C | Δ | x | o | - | - | o |
| 290 °C | x | - | x | - | - | x |
| Notes | | | | | | |
| o: No change observed at all in external appearance.<br>Δ: No deformation of shape observed, but surface roughness occurred.<br>x: Shape deteriorates considerably. | | | | | | |

Examples 4 and 5 and Comparative Example 4

4-Methyl-1-pentene homopolymer having an [η] of 1.7 dl/g, an Mw/Mn of 7.5, a melting point of 241 °C, a crystallinity of 42%, a DSC parameter of 3.0, a melt flow rate (load 5 kg, temperature 260 °C) of 100 g/10 min, hereinafter referred to as TPX) and polyphenylene sulfide T-1 (made by Toplan Co., tradename, melt viscosity at 290 °C and $\dot{\gamma}$ = 1000 $sec^{-1}$ of 2500 poise, hereinafter referred to as T-1) or T-4 (made by same company, tradename, melt viscosity at 290 °C and $\dot{\gamma}$ = 1000 $sec^{-1}$ of 10,000 poise, hereinafter referred to as T-4) were blended in a ratio by weight of 70:30 and then injection molded at 290 °C to obtain a cap-like thin resin shaped article with a thickness of 0.5 mm.

The above-mentioned resin shaped article was placed in an oven where a predetermined temperature was held for 5 minutes so as to perform a shape holding test. As a Comparative Example, the same test was performed on a shaped article made of solely TPX. The results are shown in Table 2.

Table 2

| | Ex. 4 | Ex. 5 | Comp. Ex. 4 |
|---|---|---|---|
| Composition | TPX/T-1 | TPX/T-4 | TPX |
| Weight ratio | 70/30 | 70/30 | - |
| Temperature (°C) | | | |
| 230 | o | o | o |
| 240 | o | o | x |
| 250 | o | o | - |
| 260 | o | x | - |
| 270 | x | - | - |
| Note: | | | |
| o... shape held<br>x... shape lost | | | |

Examples 6 and 7

The TPX and T-1 or T-4 used in Examples 4 and 5 were blended at a weight ratio of 80:20 and injection molded or compression molded at 290°C to obtain a resin shaped article of 125 mm x 25 mm x 2 mm.

One end of the resultant shaped article was held to hold the article horizontal. The article was held for 60 minutes in an oven at a predetermined temperature and a heat deformation test performed. The distance (mm) by which the end dropped after 60 minutes was measured. The results are shown in Table 3.

Table 3

| | Ex. 6 | | Ex. 7 | |
|---|---|---|---|---|
| Composition | TPX/T-1 | | TPX/T-4 | |
| Weight ratio | 80/20 | | 80/20 | |
| Molding method | Injection | Compression | Injection | Compression |
| Temperature | | | | |
| 260°C | 45 mm | 73 mm | 50 mm | 80 mm |
| 280°C | 67 mm | Test piece melted, making measurement impossible | 73 mm | Test piece melted, making measurement impossible |

To study the heat resistant aging property, the tensile strength ($kg/cm^2$) of the above-mentioned resin shaped article was measured before and after holding it in an oven at 160°C. The results are shown in Table 4.

Table 4

| | Ex. 6 | | Ex. 7 | |
|---|---|---|---|---|
| Composition | TPX/T-1 | | TPX/T-4 | |
| Weight ratio | 80/20 | | 80/20 | |
| Molding method | Injection | Compression | Injection | Compression |
| Before heating | 230 kg/cm² | 215 kg/cm² | 255 kg/cm² | 222 kg/cm² |
| No. of days passed | | | | |
| 5 days | 255 kg/cm² | 240 kg/cm² | 260 kg/cm² | 170 kg/cm² |
| 10 days | 250 kg/cm² | 185 kg/cm² | 250 kg/cm² | 30 kg/cm² |
| 15 days | 230 kg/cm² | 80 kg/cm² | 70 kg/cm² | x |
| 20 days | 230 kg/cm² | x | 50 kg/cm² | - |

Examples 8 and 9 and Comparative Examples 5 to7

4-Methyl-1-pentene homopolymer having an [η] of 1.7 dl/g, an Mw/Mn of 7.5, a melting point of 241 °C, a crystallinity of 42%, a DSC parameter of 3.0, a melt flow rate (load 5 kg, temperature 260 °C) of 100 g/10 min (hereinafter referred to as TPX) also used and a graft reaction of anhydrous maleic acid performed in a toluene solution at 145 °C with a dicumylperoxide catalyst. An excess of acetone was added to the resultant reaction product to precipitate the polymer. The polymer was filtered out and the precipitate was repeatedly washed with acetone to obtain anhydrous maleic acid graft modified poly-4-methyl-1-pentene A (hereinafter referred to as M-TPX).

The graft ratio of the anhydrous maleic acid units of the modified polymer was 4.0% by weight and the intrinsic viscosity at 135 °C in decalin was 0.95 dl/g, the melting point 210 °C, the crystallinity 18%, the Mw/Mn 4.5, and the DSC parameter 2.8.

The above-mentioned TPX and M-TPX and polyphenylene sulfide T-1 (made by Toplan Co., tradename, melt viscosity at 290 °C and $\dot{\gamma}$ = 1000 $sec^{-1}$ of 2500 poise, hereinafter referred to as T-1) or T-4 (made by same company, tradename, melt viscosity at 290 °C and $\dot{\gamma}$ = 1000 $sec^{-1}$ of 10,000 poise, hereinafter referred to as T-4) were blended in the ratios by weight shown in Table 5 and then injection molded at 290 °C to obtain cap-like thin resin shaped articles with a thickness of 0.5 mm.

The above-mentioned resin shaped articles were placed in an oven where a predetermined temperature was held for 5 minutes so as to perform a shape holding test. As Comparative Examples, the same test was performed on shaped articles made of solely TPX and shaped articles not including M-TPX. The results are shown in Table 5.

Table 5

| | Ex. 8 | Ex. 9 | Comp. Ex. 5 | Comp. Ex. 6 | Comp. Ex. 7 |
|---|---|---|---|---|---|
| Composition | TPX/M-TPX/T-1 | TPX/M-TPX/T-4 | TPX | TPX/T-1 | TPX/T-4 |
| Weight ratio | 70/1/30 | 70/1/30 | | 70/30 | 70/30 |
| Temperature (°C) | | | | | |
| 230 | o | o | o | o | o |
| 240 | o | o | x | o | o |
| 250 | o | o | - | o | o |
| 260 | o | o | - | o | x |
| 270 | o | x | - | x | - |
| 280 | x | - | - | - | - |
| Note: | | | | | |
| o... shape held<br>x... shape lost | | | | | |

Examples 10 to 12

The M-TPX and TPX and the T-1 or T-4 used in Examples 8 and 9 were blended at the weight ratios shown in Table 6 and injection molded or compression molded at 290°C to obtain a resin shaped article of 125 mm x 25 mm x 2 mm.

One end of each of the resultant shaped articles was held to hold the article horizontal. The article was held for 60 minutes in an oven at a predetermined temperature and a heat deformation test performed. The distance (mm) by which the end dropped after 60 minutes was measured. The results are shown in Table 6.

Table 6

| | Ex. 10 | | Ex. 11 | | Ex. 12 | |
|---|---|---|---|---|---|---|
| Composition | TPX/M-TPX/T-1 | | TPX/M-TPX/T-4 | | TPX/M-TPX/T-4 | |
| Weight ratio | 80/1/20 | | 80/1/20 | | 60/1/40 | |
| Molding method | Injection | Compression | Injection | Compression | Injection | Compression |
| Temperature | | | | | | |
| 260°C | 40 mm | 68 mm | 44 mm | 72 mm | 24 mm | 46 mm |
| 280°C | 60 mm | Melted | 60 mm | Melted | 50 mm | 120 mm |

Next, to study the heat resistant aging property, the tensile strength ($kg/cm^2$) of the above-mentioned resin shaped articles was measured before and after holding the in an oven at 160°C. The results are shown in Table 7.

Table 7

| | Ex. 10 | | Ex. 11 | | Ex. 12 | |
|---|---|---|---|---|---|---|
| Composition | TPX/M-TPX/T-1 | | TPX/M-TPX/T-4 | | TPX/M-TPX/T-4 | |
| Weight ratio | 80/1/20 | | 80/1/20 | | 60/1/40 | |
| Molding method | Injection (kg/cm$^2$) | Compression (kg/cm$^2$) | Injection (kg/cm$^2$) | Compression (kg/cm$^2$) | Injection (kg/cm$^2$) | Compression (kg/cm$^2$) |
| Before heating | 245 | 230 | 270 | 240 | 305 | 255 |
| No. of days passed | | | | | | |
| 5 days | 270 | 255 | 275 | 260 | 355 | 270 |
| 10 days | 270 | 250 | 275 | 45 | 310 | 50 |
| 15 days | 270 | 250 | 110 | x | 125 | x |
| 20 days | 270 | 75 | 85 | - | 125 | - |

## Claims

1. A heat resistant poly-4-methyl-1-pentene resin composition comprising (i) 100 parts by weight of a resin component containing 80 to 90% by weight of poly-4-methyl-1-pentene and 10 to 20% by weight of polyphenylene sulfide and (ii) 10 to 60 part by weight of reinforcing fiber.

2. A heat resistant poly-4-methyl-1-pentene resin composition comprising 40 to 84% by weight of poly-4-methyl-1-pentene and 16 to 60% by weight of polyphenylene sulfide.

3. A composition according to claim 2 further comprising 10 to 60 parts by weight, based on 100 parts by weight of the resin component, of reinforcing fiber.

4. A composition according to any one of claims 1 to 3 wherein the poly-4-methyl-1-pentene comprises at least one 4-methyl-1-pentene homopolymer or copolymer of 85 mol% or more of 4-methyl-1-pentene, with 15mol% or less of an $\alpha$-olefin having 2 to 20 carbon atoms.

5. A composition according to any one of claims 1 to 4 wherein the poly-4-methyl-1-pentene has a melt flow rate of 5 to 500 g/10 min under a load of 5 kg and a temperature of 260° C.

6. A composition according to any one of claims 1 to 5 wherein the poly-4-methyl-1-pentene is partially or entirely graft modified with an unsaturated carboxylic acid or a derivative thereof in a range of 0.01 to 10% by weight.

7. A composition according to claim 6 wherein the graft modified poly-4-methyl-1-pentene has an inherent viscosity of 0.5 to 15 dl/g in a decalin solvent at 135° C.

8. A composition according to any one of claims 1 to 7 wherein the polyphenylene sulfide has a melt viscosity of 50 to 50000 mPa,s under a temperature of 300° C and a shear rate $\dot{\gamma}$ of 200 $sec^{-1}$.

9. A composition according to any one of claims 1 to 8 comprising at least one reinforcing fiber selected from glass fiber, carbon fiber, boron fiber, potassium titanate fiber, wollastonite, asbestos fiber and aramide fiber.

10. A shaped article derived from a composition according to any one of claims 1 to 9 wherein the polyphenylene sulfide forms a lamellar continuous phase at a surface of the article.

*Fig. I*

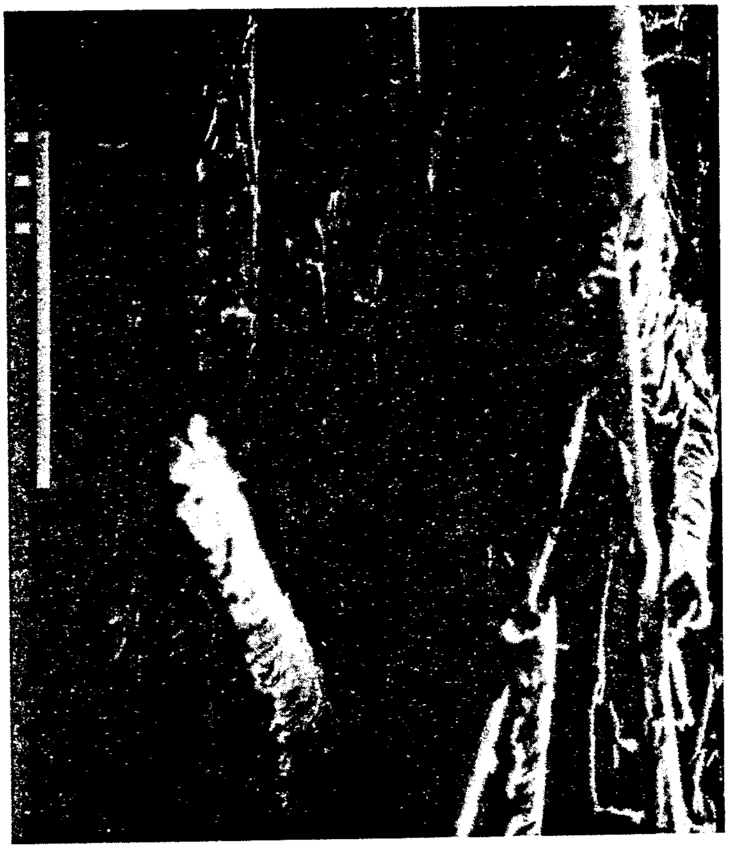

Fig. 2

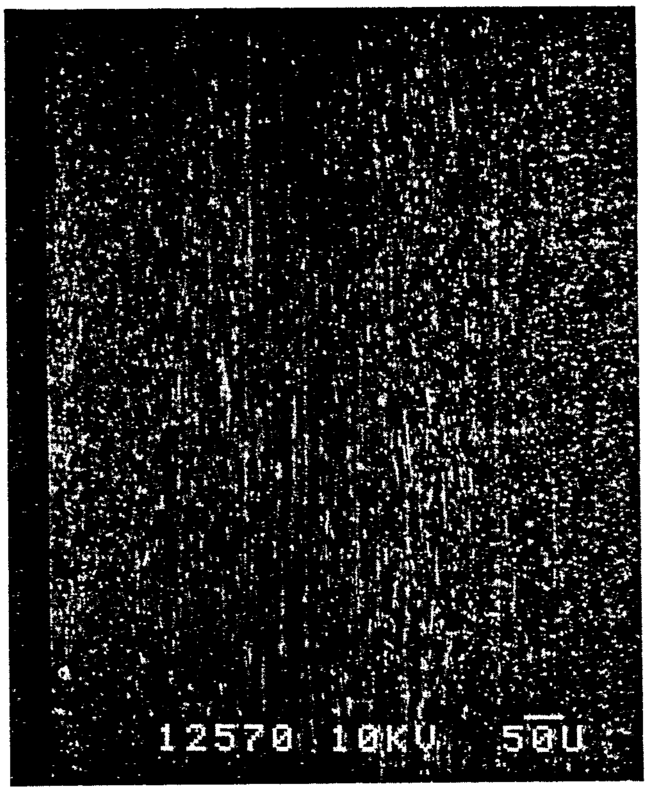

Fig. 3